# DEMANDE DE BREVET EUROPEEN

(11) **EP 4 832 418 A1**
(43) Date de publication de la demande: **28.10.2026**
(21) Numéro de dépôt: 26171755.7
(22) Date de dépôt: 10.04.2026
(51) Int. Cl.: H04L 9/40

(54) **PROCÉDÉ ET DISPOSITIF DE GÉNÉRATION DE CODEC**

(30) Priorité: 25.04.2025 FR 2504361
(71) Demandeur: THALES, 92190 Meudon (FR)
(72) Inventeur: FINKELSTEIN, Vincent, 92230 GENEVILLIERS cedex (FR); NGUYEN, Duc Thang, 92230 GENEVILLIERS Cedex (FR); DELPEYRAT, Hervé, 92230 GENEVILLIERS Cedex (FR)
(74) Mandataire: Atout PI Laplace

(57) **Abrégé**

L'invention concerne un dispositif et un procédé pour générer un codec pour analyser des informations échangées entre des domaines, le procédé étant mis en œuvre par ordinateur et comprenant des étapes consistant à :
- déclarer un ensemble de données caractérisant un modèle de codec ;
- générer à partir desdites données une première représentation d'un modèle de codec de haut niveau ;
- générer à partir de la première représentation une seconde représentation d'un modèle de codec de bas niveau ;
- générer un graphe de contrôle de flot dudit modèle de codec de bas niveau et un jeu de données de test, et exécuter ledit graphe ;
- générer à partir du résultat de l'exécution du graphe de contrôle un fichier de code source de modèle de codec ; et
- compiler le fichier code source pour obtenir un fichier exécutable d'un codec.

## Description

### Domaine de l'invention

L'invention est dans le domaine technique de la cybersécurité, plus particulièrement celui des passerelles de sécurité multi-niveaux qui permettent de filtrer des flux de données échangés entre des domaines pour sécuriser les échanges.

### Etat de la Technique

Une passerelle de sécurité interconnectée entre deux domaines permet de protéger un domaine par rapport à l'autre en effectuant différents contrôles et vérifications des flux d'information entrants et sortants, afin de protéger d'éventuelles attaques informatiques malveillantes.

Pour ce faire, une passerelle de sécurité implémente diverses Fonctions de Protection (FP) ou fonctions de sécurité qui vont agir à différents niveaux d'analyse des protocoles impliqués dans les échanges de données entre les domaines, que ce soit des trames réseau ou des fichiers de messagerie.

La rupture de protocole est une des fonctions généralement présente dans une telle passerelle et consiste à intercepter et analyser le trafic réseau afin de modifier ou de filtrer les données selon des règles de sécurité prédéfinies.

La demande de brevet FR3 135 062 B1 du Demandeur présente une passerelle de sécurité réseau destinée à être embarquée à bord d'un aéronef pour connecter un domaine de confiance basse et un domaine de confiance haute d'une infrastructure informatique avionique. La passerelle offre une pluralité de fonctions de sécurité réalisées par des nœuds de traitement de données connectés en série le long d'une chaîne de filtrage d'un flux de données. Les nœuds comprennent un nœud de traitement de données de pare-feu ; un nœud de traitement de données de rupture protocolaire ; un nœud de traitement de données maître ; et un nœud de traitement de données de rupture protocolaire inverse.

Les fonctions de rupture de protocole et de rupture de protocole inverse sont mises en œuvre par des composants de type codeur/décodeur ou « codec ».

Les codecs participent à la mise en œuvre des fonctions de protection en permettant une analyse syntaxique et sémantique des champs des flux entrants/sortants.

Actuellement, le développement de tout nouveau codec pour une passerelle de sécurité est fait par des tiers, par exemple en bureau d'étude par des spécialistes devant avoir des compétences en développement informatique (par exemple, C++, C, RUST) afin d'écrire en langage de programmation une opération de filtrage à réaliser pour une application donnée, et ce en collaboration avec des personnes ayant des compétences métier quant aux protocoles à analyser. Chaque codec qui est développé est dépendant de la cible matérielle (architecture matérielle, nature des interfaces physiques, ...) sur laquelle il va être implémenté, et il doit être personnalisé.

Cette approche présente au moins les inconvénients d'être longue, coûteuse, ouverte à l'erreur humaine et non reproductible.

Or, les passerelles pour des utilisations dans des domaines de confiance où la sécurité est critique doivent être homologuées dans le Système d'Information (SI) où elles vont opérer, ou l'équipement dans lequel elles vont être implémentées doit obtenir un agrément ou une certification. Elles doivent alors être développées avec un haut niveau de développement et accompagnées de preuves de fiabilité du développement en termes fonctionnels et d'assurance de qualité du développement.

Dans de tels domaines de confiance élevée, en vue d'obtenir un agrément ou une certification, un industriel doit fournir des preuves du bon fonctionnement du codec qui a été développé.

Aussi, lors des développements par un tiers, une collaboration doit aussi être faite avec des intervenants ayant des compétences en cybersécurité pour la mise en place de preuves nécessaires à une homologation, à un agrément ou à une certification de l'équipement.

Aussi, dû aux contraintes de réalisation pour obtenir une homologation, un agrément ou une certification, de nombreux système d'information renoncent à mettre en œuvre une solution de passerelle de sécurité, et ne mettent pas en œuvre des fonctionnalités de rupture protocolaire. Ceci fait alors baisser le niveau de vérification sur les flux circulants et augmente les risques d'attaques.

Aussi, il existe un besoin pour une solution de génération d'un codec offrant des fonctions de rupture protocolaire et de rupture protocolaire inverse, qui lève les inconvénients des solutions connues.

La présente invention répond à ce besoin.

### Résumé de l'invention

Afin de répondre à la problématique indiquée, la présente invention propose une solution permettant de générer un codec ayant des fonctionnalités de rupture de protocole (directe et inverse), et qui ne nécessite pas de connaissances ou de compétences d'expert en développement informatique.

Avantageusement, un exploitant d'un système d'information peut mettre en œuvre l'outil de développement de codec de l'invention sur une plateforme interne de pré-production.

De manière générale, l'invention s'appuie sur une opération automatique de génération de codec basée sur une modélisation à haut niveau des flux d'information (messageries, formats de fichiers) à analyser. Cette modélisation est obtenue à partir d'une déclaration ou d'une saisie d'instructions, dans une interface utilisateur spécifique, relatives à des caractéristiques de la structure des messages ou des fichiers devant circuler.

Avantageusement, la solution offre une simplicité de mise en œuvre et une rapidité d'exécution permettant de produire un Encodeur/Décodeur avec un jeu de données généré et exhaustif.

Par l'approche proposée, basée sur une saisie déclarative d'éléments relatifs à la structure des messages et à l'encodage à mettre en œuvre, l'invention est indépendante de la cible et elle peut être utilisée pour produire des codecs pour plusieurs types de processeurs.

Il a ainsi été démontré par les inventeurs un temps de mise en œuvre de 3-4 jours par une personne n'ayant pas de connaissance en développement RUST, pour obtenir avec le dispositif de l'invention, une modélisation IPV4 à partir de 172 lignes saisies, contre environ 3000 lignes de code RUST dans une approche traditionnelle qui aurait nécessité plusieurs semaines de développement.

Un autre objet de la présente invention vise la génération automatique de jeux de données de tests pour fournir des preuves du niveau de test du codec.

Avantageusement, la solution en combinant la génération d'une modélisation à haut niveau avec la génération d'un jeu de données de test, permet de proposer une solution complète de codec à soumettre aux organismes d'homologation ou d'agrément ou de certification.

Pour obtenir les résultats recherchés, il est proposé un procédé pour générer un codec pour analyser des informations échangées entre des domaines, le procédé étant mis en œuvre par ordinateur et comprenant des étapes consistant à :
- déclarer un ensemble de données caractérisant un modèle de codec ;
- générer à partir desdites données une première représentation d'un modèle de codec de haut niveau ;
- générer à partir de la première représentation une seconde représentation d'un modèle de codec de bas niveau ;
- générer un graphe de contrôle de flot dudit modèle de codec de bas niveau et un jeu de données de test, et exécuter ledit graphe ;
- générer à partir du résultat de l'exécution du graphe de contrôle un fichier de code source de modèle de codec ; et
- compiler le fichier code source pour obtenir un fichier exécutable d'un codec.

Le procédé opère selon des modes de réalisation alternatifs ou combinés.

Dans un mode de réalisation, l'étape de déclarer un ensemble de données caractérisant un modèle de codec, comprend des étapes consistant à définir la structure des informations échangées entre les domaines.

Dans un mode de réalisation, l'étape de définir la structure des informations comprend des étapes consistant à définir une séquence de champs.

Dans un mode de réalisation, le procédé comprend de plus une étape consistant à décrire chaque champ selon un type 'primitive' ou 'structuré'.

Dans un mode de réalisation, l'étape de décrire un type de champ 'primitive' consiste au moins à décrire un type d'encodage, une taille du champ, des conditions de vérification de décodage et des actions d'encodage.

Dans un mode de réalisation, l'étape de décrire un type de champ 'structuré' consiste à définir une sous-séquence de champs ou une liste de choix.

Dans un mode de réalisation, l'étape de déclarer un ensemble de données caractérisant un modèle de codec comprend de plus une étape consistant à définir un ensemble de vecteurs de tests.

Dans un mode de réalisation, l'étape de générer une première représentation d'un modèle de codec de haut niveau, consiste à générer un modèle selon un langage HIR dit « High Internal Representation of Protocols », utilisant des mécanismes communs de langages impératifs comme les langages C, RUST, JAVA.

Dans un mode de réalisation, l'étape de générer une deuxième représentation d'un modèle de codec de bas niveau, consiste à générer un modèle selon un langage LIR dit « Low Internal Representation of Protocols ».

Dans un mode de réalisation, l'étape d'exécuter un graphe de contrôle de flot consiste à faire une exécution concolique et symbolique du graphe.

Dans un mode de réalisation, le procédé comprend de plus une étape consistant à charger le fichier exécutable dans un équipement interfaçant les domaines.

L'invention concerne aussi un dispositif pour générer un codec pour analyser des informations échangées entre des domaines, le dispositif comprenant des moyens pour mettre en œuvre les étapes du procédé de l'invention.

Dans une implémentation, le dispositif comprend une interface utilisateur configurée pour effectuer les étapes du procédé de l'invention.

L'invention concerne aussi un produit programme d'ordinateur qui comprend des instructions de code permettant d'effectuer les étapes du procédé de l'invention, lorsque le programme est exécuté sur un ordinateur.

La présente invention trouvera des applications avantageuses dans tout domaine où il existe le besoin d'assurer la sécurité de flux d'information entre deux domaines, que ce soit entre des systèmes d'information (SI) opérant sur des domaines de confiance de même niveau ou de niveaux différents (tels que par exemple l'Internet, une zone dématérialisée DMZ, ...), ou pour protéger un système utilisant différents types d'interfaces (USB, cartes réseau, liaison série, ...).

### Description des figures

D'autres caractéristiques et avantages de l'invention apparaîtront à l'aide de la description qui suit et des figures des dessins annexés dans lesquels :
La [FIG. 1] illustre un contexte général de mise en œuvre d'une passerelle de sécurité ;
La [FIG. 2] est un schéma fonctionnel d'un dispositif pour générer un codec selon un mode de réalisation de l'invention ;
La [FIG. 3] est un organigramme des étapes d'un procédé de génération d'un codec selon un mode de réalisation de l'invention ;
La [FIG. 4] illustre une interface utilisateur de déclaration de modélisation de codec selon un mode de réalisation de l'invention.

### Description détaillée de l'invention

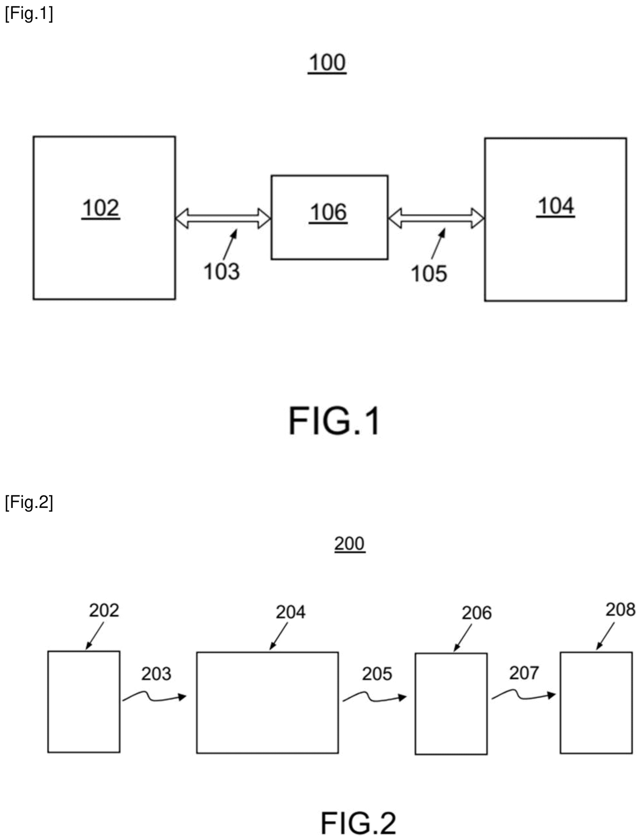

En se référant à la [FIG. 1], un contexte général 100 d'utilisation d'une passerelle de sécurité permettant de mettre en œuvre un codec produit selon le procédé de l'invention, est décrit.

Les fonctionnalités complètes de la passerelle ne sont pas décrites, car n'étant pas dans le périmètre de l'invention, et l'homme du métier pourra se référer par exemple à la demande de brevet précitée pour plus de détails.

La passerelle de sécurité 106 est placée en interface d'un premier domaine de confiance 102 et d'un deuxième domaine de confiance 104, chaque domaine ayant un niveau de confiance propre.

Par exemple et sans limitation, le premier domaine de confiance 102 peut être l'Internet d'un premier système d'information, et le deuxième domaine de confiance 104 peut être un réseau interne d'un deuxième système d'information ou peut être une zone de confiance d'un composant spécifique comme un ordinateur personnel ou une interface.

La passerelle 106 comprend plusieurs modules fonctionnels afin d'assurer un transfert sécurisé de données entre les domaines de confiance, et particulièrement les transferts d'un domaine de confiance basse vers un domaine de confiance haute.

Dans une implémentation, la passerelle 106 est réalisée comme une carte électronique implémentant différents composants permettant d'effectuer des fonctions de traitement de données pour la vérification et le contrôle des flux 103 et 105 circulant ente les domaines de confiance.

Un composant peut être tout type de dispositif disposant de ses propres ressources de calcul, mémoires, et ports de communication. De préférence, ce peut être un microcontrôleur présentant une consommation réduite. Alternativement, un composant peut être un circuit logique programmable, comme par exemple un FPGA (« Field-Programmable Gate Array »).

La passerelle comprend dans la chaine des fonctions de contrôle, un composant codec pour réaliser des fonctions de rupture de protocole et de rupture de protocole inverse.

Dans un mode de réalisation, le codec a été généré selon le procédé de l'invention.

La [FIG. 2] est un schéma fonctionnel d'un dispositif général 200 pour produire un codec selon un mode de réalisation de l'invention.

D'une manière générale, un module 202 de déclaration de données est couplé à un module 204 de génération de code source d'un codec qui est couplé à un compilateur 206 qui est couplé à un équipement 208 devant accueillir le codec.

Le module 202 de déclaration de données de modélisation permet une saisie de données depuis une interface utilisateur (IHM) configurée pour qu'un opérateur déclare des caractéristiques de messages devant circuler entre les domaines de confiance, afin de modéliser la messagerie sur laquelle les ruptures de protocoles doivent s'appliquer en phase opérationnelle sur l'équipement 208.

Le module 202 est de plus configuré pour permettre à l'utilisateur de définir un ensemble de tests pour valider la modélisation.

Dans un mode de réalisation, l'interface utilisateur 202 de déclaration est une application web accessible via un serveur http.

Le module 202 permet de décrire la structure des messages, les champs des messages et le type d'encodage/décodage de chaque champ.

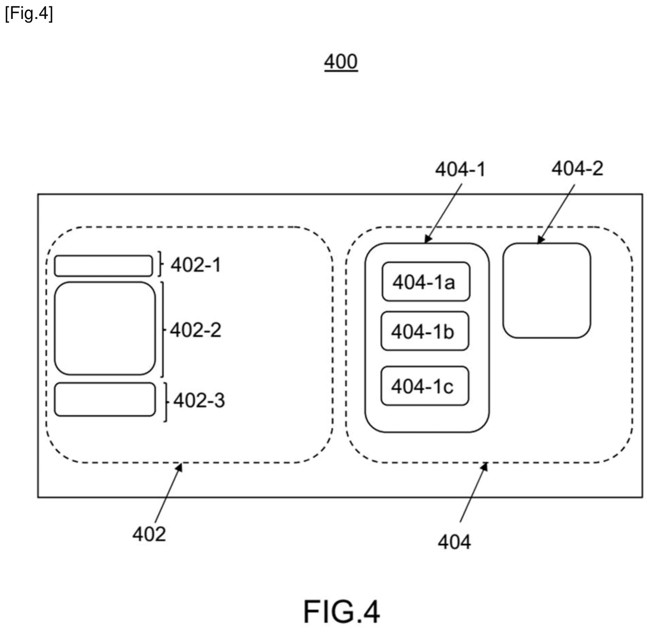

Dans un mode de réalisation, illustré sur la figure 4, l'interface propose une première région 402 de type éditeur de texte dans laquelle l'utilisateur saisit un ensemble de caractéristiques pour définir un modèle de codec, et une deuxième région 404 offrant des accès à différentes fonctionnalités pour la génération et le test d'un codec.

Dans un mode de réalisation, la première région 402 est composée de trois zones.

Une première zone 402-1 est une zone de paramétrage du projet et permet de définir différentes options, comme par exemple donner un nom au modèle (IPv4), indiquer la nature du projet (Codec IPV4), définir un langage cible (C, RUST, JAVA, Assembleur, ...), indiquer un mode (release sans log ou release avec log dans les sources générées) :

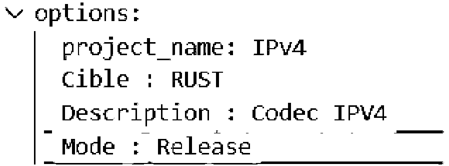

Une deuxième zone 402-2 est une zone de description de la messagerie (i.e. du flux de données qui sera à analyser en phase opérationnelle) pour donner une description de la structure de chaque message qui sera à analyser.

Un message est structuré d'une séquence de champs. La modélisation consiste à décrire chaque champ de la séquence constituant le message.

Chaque champ peut être soit de type « Primitive » (Entier, Booléen, Séquence d'octets, une chaîne de caractères, etc ...), soit de type « Structuré » (sous-séquence de champs, liste de choix, ...).

Dans un mode de réalisation, un champ de type 'Primitive' peut être défini par différents paramètres pour qualifier :
- Le nom du champ
- Le type d'encodage (« big » ou « little » Endian) mis en œuvre pour ce champ
- La nature du champ « kind », c'est-à-dire son type et sa taille. Sa taille peut être une valeur fixe ou une expression permettant de calculer sa valeur de façon dynamique
- Les contraintes applicables sur le champ comme par exemple un encadrement de la valeur [Valeur min ; Valeur max] ou l'application d'une expression logique utilisant d'autres valeurs contenues dans d'autres champs du message
- Les conditions de vérification pour le décodage
- Les actions d'encodage.

Les tables ci-après illustrent quelques exemples non limitatifs de formats de déclaration de champs. L'homme du métier pourra adapter d'autres formats selon les principes définis.

La table ci-dessous illustre un exemple de format de déclaration d'un champ 'Primitive' :

| |
|---|
| name : « Nom du champ » |
| Endian : « big » ou « little » |
| kind: «!Int» ou « !Bool » ou « !Ascii » ou « !Bytes » |
| type: « type du champ » |
| size: « Valeur » ou <expression> |
| Constraint : « Valeur » ou <expression> |
| Condition : |
| Decode_if : <expression> |
| Encode : <expression> |

La table ci-dessous illustre un exemple de format de déclaration de la nature d'un champ 'Primitive-Entier' :

| |
|---|
| kind: !Int |
| type: « iXX » ou « uXX » ou « BI » « BU » |
| size: « valeur » ou « Expression » |
| Avec |
| « ixx » # entier signé sur XX bits |
| « uXX » # entier non-signé sur xx bits |
| BI # entier stocké sous forme BigInt, stocké sur #size octets |
| BU # entier stocké sous forme BigUint, stocké sur #size octets |

La table ci-dessous illustre un exemple de déclaration de la nature d'un champ 'Primitive-Entier' de type 'u1' :

| |
|---|
| kind: !Int |
| type: u1 |
| size: !Byte 1 |

La table ci-dessous illustre un exemple de format format de déclaration de la nature d'un champ 'Primitive-Boolean' :

| |
|---|
| kind: !Bool |
| type: « iXX » ou « uXX » |
| size: « valeur » ou « expression » |
| true_value: « valeur » ou « expression » |
| false_value: « valeur » ou « expression » |

La table ci-dessous illustre un exemple de déclaration de la nature d'un champ 'Primitive-Boolean' de type 'u8' :

| |
|---|
| kind: !Bool |
| type: u8 |
| size: 1 |
| true_value: 255 |
| false_value: 5 |

La table ci-dessous illustre un exemple de format de déclaration de la nature d'un champ 'Primitive-Ascii' :

| |
|---|
| kind: !Ascii |
| type: « iXX » ou « uXX » |
| size: « valeur » ou « expression » |

La table ci-dessous illustre un exemple de déclaration de la nature d'un champ 'Primitive-Ascii' de type 'u64' :

| |
|---|
| name: Prenom |
| kind: !IntAscii |
| size: 8 |
| type: u64 |

La table ci-dessous illustre un exemple de déclaration de la nature d'un champ 'Primitive-bits' :

| |
|---|
| kind: !Bytes |
| type: « iXX » ou « uXX » |
| size: « valeur » ou « Expression » |
| true_value: « valeur » ou « expression » |
| false_value: « valeur » ou « expression » |

La table ci-dessous illustre un exemple de déclaration de la nature d'un champ 'Primitive-bits' de type 'u8' :

| |
|---|
| kind: !Bytes |
| type: u8 |
| size: !Byte 1 |
| true_value: 255 |
| false_value: 5 |

Dans un mode de réalisation, un format d'un champ de type 'Structuré' avec des sous-séquences de champs (champ1, ..., champN), peut être défini selon la syntaxe illustrée dans la table ci-dessous :

| |
|---|
| kind: !Seq |
| repeat: !Count <expr: u32> répétition avec un compteur ou !While <expr: bool> répétition tant qu'une condition est vrai |
| children: |
| [...] # champ 1 |
| [...] # champ 2 |
| # ... |
| [...] # champ N |

La table ci-dessous illustre un exemple de déclaration de la nature d'un champ structuré avec des sous-séquences de champs (champ1, champ2) :

| |
|---|
| kind: !Seq |
| children: |
| name: champ1 |
| kind: !Int |
| size: !Byte 1 |
| type: u8 |
| name: champ2 |
| type: u8 |
| size: 1 |
| true_value: 255 |
| false_value: 5 |

Dans un mode de réalisation, un format d'un champ de type 'Structuré' avec une « liste de choix » peut être défini selon l'exemple de la table ci-dessous :

| |
|---|
| kind: !Choice |
| arms: |
| condition: # champ 1 |
| decode_if: <expression: bool> |
| [...] |
| condition: # champ 2 |
| decode_if: <expression: bool> |
| [...] |
| # ... |
| condition: # champ N |
| decode_if: <expression: bool> |
| [...] |

La table ci-dessous illustre un exemple de déclaration d'un Type "sous-séquences de champs" :

| |
|---|
| name: choix |
| kind: !Choice |
| arms: |
| condition: |
| decode_if: "#value(this) <= 1" |
| name: cas_1 |
| kind: !Seq |
| children: |
| name: te |
| kind: !IntAscii |
| size: 1 |
| type: u8 |
| name: 2 |
| kind: !IntAscii |
| size: 1 |
| type: u8 |
| constraints: |
| "#value(this) == 8" |
| "#value(../te) < #value(this)" |
| condition: |
| decode_if: "#value(this) < 10 && #value(this) > 1" |
| name: cas_2 |
| kind: !Seq |
| children: |
| name: 3 |
| kind: !IntAscii |
| size: 2 |
| type: u8 |
| constraints: |
| "#value(this) >= 4" |
| "#value(this) <= 89" |
| name: 4 |
| kind: ! IntAscii |
| size: 2 |
| type: u8 |

Revenant à la figure 4, une troisième zone 402-3 permet de définir un ensemble de tests à effectuer pour valider la modélisation.

La table ci-dessous illustre un exemple de déclaration de tests :

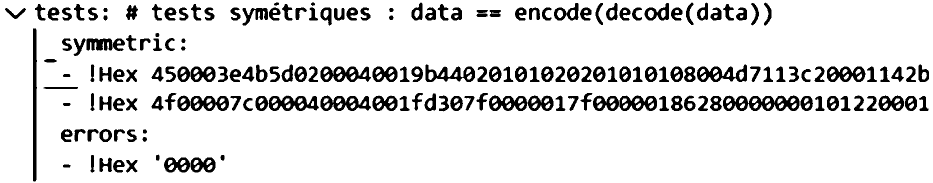

La zone "Tests" contient des vecteurs de tests qui permettent de tester unitairement le codec pour vérifier qu'il est conforme avec la spécification.

Dans un mode de réalisation, chaque test est symétrique.

Les tests permettent de vérifier si une trame est valide ou non.

Un test consiste à décoder des entrées puis encoder et à comparer l'entrée et la sortie :
"input_bytes --> [decode] --> data --> [encode] --> output_bytes assert (input_bytes == output_bytes)".

Revenant à la figure 4, la deuxième région 404 de l'interface utilisateur permet d'appeler différentes fonctions accessibles depuis différents onglets.

Dans un mode de réalisation, un onglet 404-1 est relatif à une fonction 'Génération de données' opérée par un solveur mathématique, qui après activation délivre dans une première zone de paramétrage 404-1a, des informations relatives au nombre de cycles d'exécution du solveur, dans une deuxième zone de journalisation 404-1b, des informations relatives au nombre de trames générées et à un taux de couverture, et dans une troisième zone de résultat 404-1c, des informations relatives à la liste des trames générées.

Dans un mode de réalisation, la liste des trames générées peut être réinjectées dans la zone de test 402-3.

Dans un mode de réalisation, un onglet 404-2 de la deuxième région 404, est une zone de visualisation relative à l'exécution des tests, et permet après activation d'obtenir les résultats de chaque test effectué.

Revenant à la figure 2, le module 204 permet de générer un modèle de codec sur la base des données saisies. Dans un mode de réalisation, le modèle de codec est généré sous la forme d'un code source dans le langage défini, par exemple RUST.

Le fichier source de codec est ensuite compilé dans le module 206, puis il peut être installé sur un équipement 208 pour la phase opérationnelle.

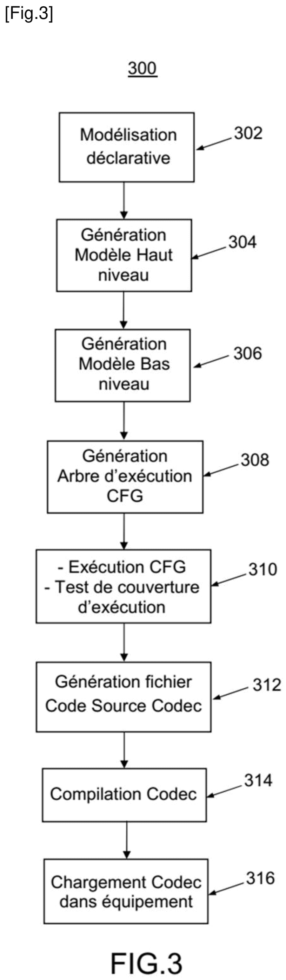

La [FIG. 3] est un organigramme des étapes d'un procédé de génération d'un codec selon un mode de réalisation de l'invention.

Le procédé 300 débute par une phase de saisie déclarative 302, à partir de l'interface utilisateur 202, de toutes les données relatives au modèle de codec à générer et aux tests à effectuer.

Dans une étape suivante 304, le procédé permet une génération automatique d'un modèle de haut niveau.

Dans un mode de réalisation, le modèle est généré selon un langage HIR (« High Internal Representation of Protocols » selon l'anglicisme consacré) qui utilise des mécanismes communs de langages impératifs comme les langages C, RUST, JAVA.

Dans une réalisation particulière, le langage HIR est un assemblage de blocs fonctionnels prédéfinis permettant de décrire l'algorithme de traitement d'encodage et de décodage.

Dans un mode de réalisation, il est établi un HIR pour décrire l'algorithme de décodage et un HIR pour décrire l'algorithme d'encodage.

Dans un mode de réalisation, le modèle généré peut être représenté sous une forme textuelle et/ou sous une version graphique présentant l'arborescence des différents champs déclarés.

L'étape 304 permet de vérifier les règles de cohérence du modèle, et permet d'effectuer une analyse sémantique du modèle au niveau des champs déclarés.

La vérification de règles de cohérence peut consister par exemple à vérifier que la syntaxe telle que définie est correcte ; vérifier que la structure du message n'a pas d'incohérence dans sa définition (comme avoir des champs 'enfant' alors qu'il a été déclaré un champ 'int' au lieu d'une séquence, ou définir un type de champ inconnu du logiciel).

Dans une étape suivante 306, le procédé permet d'optimiser la construction du modèle, et de générer une représentation du modèle de bas niveau.

Dans un mode de réalisation, le modèle est généré selon un langage LIR (« Low Internal Representation of Protocols » selon l'anglicisme consacré) qui est une traduction dans un langage impératif agnostique, et qui présente la particularité d'être transposable dans un langage impératif usuel (C, RUST, JAVA, assembleur).

A partir de la description d'un modèle bas niveau, le procédé dans une étape suivante 308, permet de générer un arbre d'exécution pour le modèle sous la forme d'un graphe de contrôle de flot (CFG pour « Control Flow Graph » selon l'anglicisme consacré).

Le procédé poursuit par une étape 310 consistant à exécuter le graphe. Dans un mode de réalisation, l'étape 310 permet de faire une exécution concolique et symbolique.

Avantageusement, l'étape d'exécution 310 en analysant le graphe, permet de générer automatiquement un jeux de données exhaustif de test du modèle, de mesurer un taux de couverture d'exécution, et d'identifier les branches qui n'ont pas été exécutées afin de les supprimer.

Dans une étape suivante 312, le procédé permet de générer un fichier code source du modèle de codec dans le langage de programmation défini dans la zone des options de la modélisation.

Dans une étape suivante 314, le procédé permet de compiler le code source du codec pour délivrer un composant codec compilé.

Le fichier exécutable peut dans une étape suivante 316 être chargé sur un équipement interfaçant les domaines entre lesquels sont échangés les flux de données.

## Revendications

1. Procédé (300) pour générer un codec pour analyser des informations échangées entre domaines de confiance, le procédé étant mis en œuvre depuis une interface utilisateur et comprenant des étapes consistant à :
- déclarer (302) un ensemble de données caractérisant un modèle de codec pour l'analyse de protocoles impliqués dans des échanges de données entre des domaines de confiance ;
- générer (304) à partir desdites données une première représentation d'un modèle de codec de haut niveau ;
- générer (306) à partir de la première représentation une seconde représentation d'un modèle de codec de bas niveau ;
- générer (308) un graphe de contrôle de flot dudit modèle de codec de bas niveau ;
- exécuter (310) ledit graphe et générer un jeu de données de test exhaustif pour valider le modèle de codec ;
- générer (312) à partir du modèle de codec validé, un code source de codec dans un langage de programmation défini ; et
- compiler (314) le code source de codec pour obtenir un fichier exécutable du codec.

2. Le procédé selon la revendication 1 dans lequel l'étape (302) de déclarer un ensemble de données caractérisant un modèle de codec, comprend des étapes consistant à définir la structure des informations échangées entre les domaines.

3. Le procédé selon la revendication 2 dans lequel l'étape de définir la structure des informations comprend des étapes consistant à définir une séquence de champs.

4. Le procédé selon la revendication 3 comprenant de plus une étape consistant à décrire chaque champ selon un type 'primitive' ou 'structuré'.

5. Le procédé selon la revendication 4 dans lequel l'étape de décrire un type de champ 'primitive' consiste au moins à décrire un type d'encodage, une taille du champ, des conditions de vérification de décodage et des actions d'encodage.

6. Le procédé selon la revendication 4 dans lequel l'étape de décrire un type de champ 'structuré' consiste à définir une sous-séquence de champs ou une liste de choix.

7. Le procédé selon l'une quelconque des revendications 1 à 6 dans lequel l'étape (302) de déclarer un ensemble de données caractérisant un modèle de codec comprend de plus une étape consistant à définir un ensemble de vecteurs de tests.

8. Le procédé selon l'une quelconque des revendications 1 à 7 dans lequel l'étape de générer une première représentation d'un modèle de codec de haut niveau, consiste à générer un modèle selon un langage HIR dit « High Internal Representation of Protocols », utilisant des mécanismes communs de langages impératifs comme les langages C, RUST, JAVA.

9. Le procédé selon l'une quelconque des revendications 1 à 8 dans lequel l'étape de générer une deuxième représentation d'un modèle de codec de bas niveau, consiste à générer un modèle selon un langage LIR dit « Low Internal Representation of Protocols ».

10. Le procédé selon l'une quelconque des revendications 1 à 9 dans lequel l'étape d'exécuter (310) un graphe de contrôle de flot consiste à faire une exécution concolique et symbolique du graphe.

11. Le procédé selon l'une quelconque des revendications 1 à 10 comprenant de plus une étape consistant à charger le fichier exécutable dans un équipement interfaçant les domaines.

12. Un produit programme d'ordinateur, ledit programme d'ordinateur comprenant des instructions de code permettant d'effectuer les étapes du procédé selon l'une quelconque des revendications 1 à 11, lorsque ledit programme est exécuté sur un ordinateur.

13. Un dispositif pour générer un codec pour analyser des informations échangées entre des domaines de confiance, le dispositif comprenant des moyens pour mettre en œuvre les étapes du procédé de l'une quelconque des revendications 1 à 11.

14. Le dispositif selon la revendication 13 comprenant une interface utilisateur configurée pour effectuer les étapes du procédé de l'une quelconque des revendications 1 à 11.
